# EUROPEAN PATENT APPLICATION

(11) **EP 4 806 621 A1**
(43) Date of publication of application: **16.09.2026**
(21) Application number: 26157093.1
(22) Date of filing: 06.02.2026
(51) Int. Cl.: B29C 70/38, B29C 70/74, B33Y 40/20, B29C 70/78

(54) **METHODS AND SYSTEMS FOR REINFORCING ADDITIVELY MANUFACTURED STRUCTURES AND FIBER-REINFORCED ADDITIVELY MANUFACTURED STRUCTURES**

(30) Priority: 12.03.2025 US 202519077238
(71) Applicant: The Boeing Company, Arlington, VA 22202 (US)
(72) Inventor: Crothers, Phillip J., Arlington, 22202 (US); Snooks, Roland, Arlington, 22202 (US); Kim, Alan Ho Kyeong, Arlington, 22202 (US); Mohamed, Hesameddin, Arlington, 22202 (US)
(74) Representative: Collins, Emily Jane

(57) **Abstract**

A method for reinforcing an additively manufactured structure includes adding one or more reinforcement fibers to a carrier substrate to form a textile substrate. The one or more reinforcement fibers distributed about the textile substrate. The textile substrate is draped over the additively manufactured structure. A resin is applied to the textile substrate on the surface of the additively manufactured structure to form a resin-based composite bonded to the surface. A system for reinforcing an additively manufactured structure includes a fabrication tool set with first and second fabrication tools. A fiber-reinforced additively manufactured structure includes an additively manufactured structure and a resin-based composite. The additively manufactured structure includes a surface. The resin-based composite is bonded to the surface. The resin-based composite includes a textile substrate and a resin.

## Description

### FIELD

The present disclosure relates generally to fiber reinforcement of additively manufactured structures and, particularly, to adding a resin-based composite on a surface of additively manufactured structures. Various arrangements of one or more resin-based composites on the surface of additively manufactured structures are contemplated. For example, pieces of textile substrates can be arranged on the surface based on shapes and contours of the additively manufactured structure. A resin is applied to the textile substrates to form the resin-based composites. The resulting fiber-reinforced additively manufactured structures have numerous applications in aircraft interiors. Additionally, the fiber-reinforced additively manufactured structures have applications as construction materials and components of system equipment and assemblies.

### BACKGROUND

The structural integrity of complex additively manufactured structures, including three-dimensional printed parts, exhibit inherent weakness related to poor layer-to-layer adhesion. Accordingly, those skilled in the art continue with research and development efforts to provide techniques for strengthening and reinforcing additively manufactured structures.

### SUMMARY

Disclosed are examples of methods and systems for reinforcing an additively manufactured structure and fiber-reinforced additively manufactured structures. The following is a non-exhaustive list of examples, which may or may not be claimed, of the subject matter according to the present disclosure.

In an example, the disclosed method for reinforcing an additively manufactured structure includes: (1) adding one or more reinforcement fibers to a carrier substrate to form a textile substrate, the one or more reinforcement fibers distributed about the textile substrate; (2) draping the textile substrate over at least a portion of a surface of the additively manufactured structure; and (3) applying a resin to the textile substrate on the surface of the additively manufactured structure to form a resin-based composite bonded to the surface.

In an example, the disclosed system for reinforcing an additively manufactured structure includes a fabrication tool set that includes a first fabrication tool and a second fabrication tool. The first fabrication tool configured to add one or more reinforcement fibers to a carrier substrate to form a textile substrate. The one or more reinforcement fibers distributed about the textile substrate. The textile substrate is configured for draping over at least a portion of a surface of the additively manufactured structure. The second fabrication tool is configured to apply a resin to the textile substrate on the surface of the additively manufactured structure to form a resin-based composite bonded to the surface.

In an example, the fiber-reinforced additively manufactured structure includes an additively manufactured structure and at least one resin-based composite. The additively manufactured structure includes a surface. The at least one resin-based composite bonded to at least a portion of the surface. The at least one resin-based composite includes a textile substrate and a resin. The textile substrate includes one or more reinforcement fibers added to a carrier substrate. The resin applied to the textile substrate on the surface of the additively manufactured structure to form the at least one resin-based composite.

Other examples of the disclosed methods and systems for reinforcing an additively manufactured structure and the disclosed fiber-reinforced additively manufactured structures will become apparent from the following detailed description, the accompanying drawings and the appended claims.

### BRIEF DESCRIPTION OF THE DRAWINGS

Fig. 1 is a flow diagram of an example of a method for reinforcing an additively manufactured structure;
Fig. 2 is a top view of an example of an additively manufactured structure;
Fig. 3 is a top view of examples of a textile substrate and a resin-based composite;
Fig. 4 is a top view of an example of a fiber-reinforced additively manufactured structure;
Fig. 5, in combination with Fig. 1, is a flow diagram of another example of a method for reinforcing an additively manufactured structure;
Fig. 6 is a flow diagram of an example of the adding of the one or more reinforcement fibers in the method of Fig. 1;
Fig. 7, in combination with Fig. 1, is a flow diagram of still another example of a method for reinforcing an additively manufactured structure;
Fig. 8 is a top view of an example of a carrier sheet marked for cutting one or more carrier substrates;
Fig. 9 is a flow diagram of an example of the draping of the textile substrate in the method of Fig. 1;
Fig. 10, in combination with Fig. 1, is a flow diagram of still yet another example of a method for reinforcing an additively manufactured structure;
Fig. 11, in combination with Fig. 1, is a flow diagram of another example of a method for reinforcing an additively manufactured structure;
Figs. 12A-C are top views of examples of first, second and third textile substrates and first, second and third resin-based composites;
Fig. 13, in combination with Fig. 1, is a flow diagram of yet another example of a method for reinforcing an additively manufactured structure;
Fig. 14 is a functional block diagram of an example of a system for reinforcing an additively manufactured structure that also shows an example of a fiber-reinforced additively manufactured structure;
Fig. 15 is a block diagram of aircraft production and service methodology that implements one or more of the examples of methods for reinforcing an additively manufactured structure disclosed herein to produce components of the aircraft; and
Fig. 16 is a schematic illustration of an aircraft that incorporates one or more examples of components produced using one or more of the examples of methods for reinforcing an additively manufactured structure disclosed herein.

### DETAILED DESCRIPTION

The various examples of methods 100, 500, 700, 1000, 1100, 1300 and systems 1400 for reinforcing additively manufactured structures 200 and various examples of fiber-reinforced additively manufactured structures 400 disclosed herein identify techniques for creating a resin-based composite 308 on a surface 204 of the additively manufactured structure 200. For example, the techniques establish processes for fabrication of fiber-reinforced three-dimensional printed components for aircraft interiors or building structures. The parts are fabricated through the lamination of tailored fiber placement pre-forms on three-dimensional printed parts. The fiber pre-forms enable structural and artistic patterns to be embedded within plastic surfaces.

The methods 100, 500, 700, 1000, 1100, 1300, systems 1400 and fiber-reinforced additively manufactured structures 400 disclosed herein increase the structural integrity of complex three-dimensional printed parts, particularly in view of the inherent weakness related to layer adhesion by incorporating carbon fiber. The various techniques remove the need for molds when fabricating fiber composites. Additionally, tailored fiber placement techniques overcome the need for a robotic end effector that limits the geometric size of the end component/structure. The disclosed methods and systems enable highly complex designs and mass customization.

The various methods and systems disclosed herein involve the combination of fused deposition modeling using three-dimensional printing and tailored fiber placement. The techniques laminate the tailored fiber placement pre-form on three dimensional printed parts by applying resin to the tailored fiber placement to form a resin-based composite. For example, the methods and systems involve laminating the carbon fiber through the direct application of resin to textile substrates on the surface of the three-dimensional printed material, rather than using a secondary consolidation process to join the carbon fiber on to the printed part.

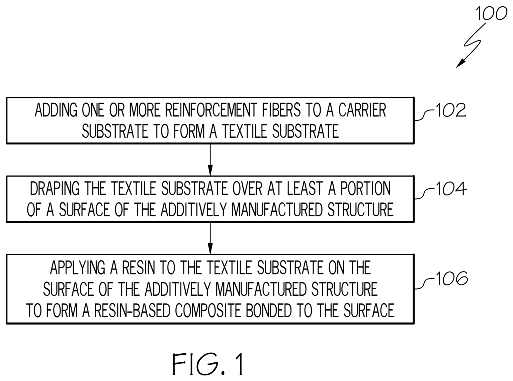

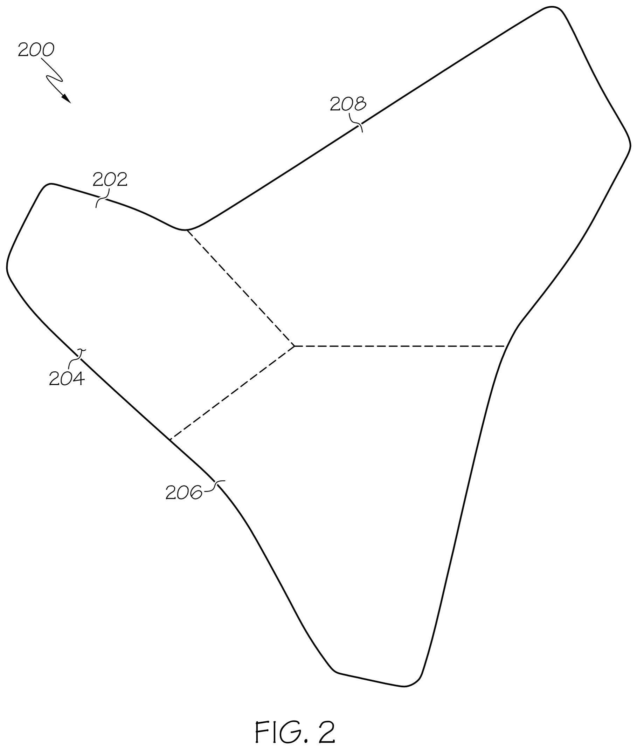

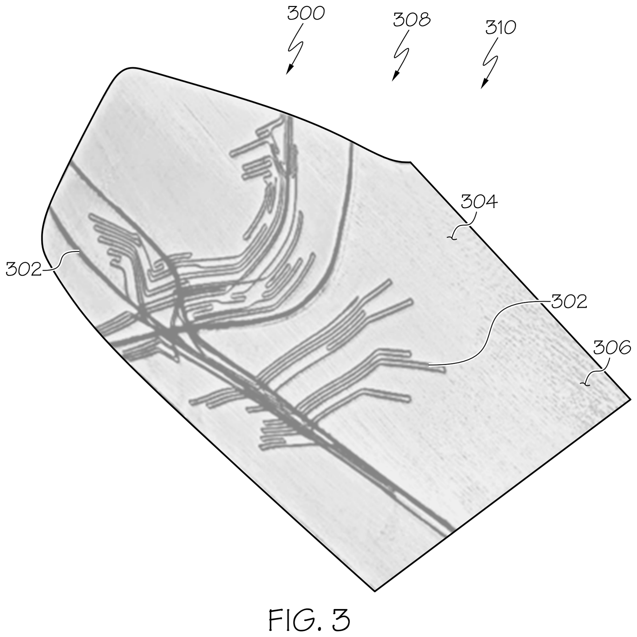

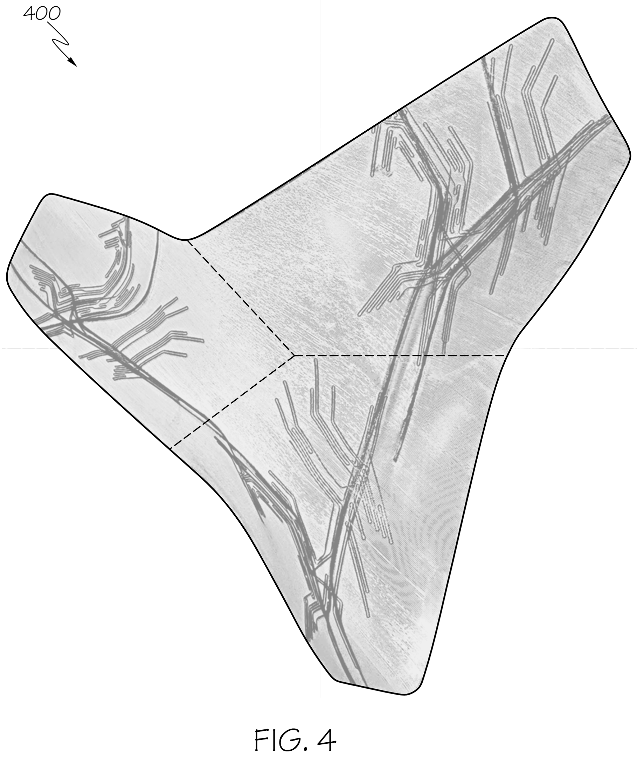

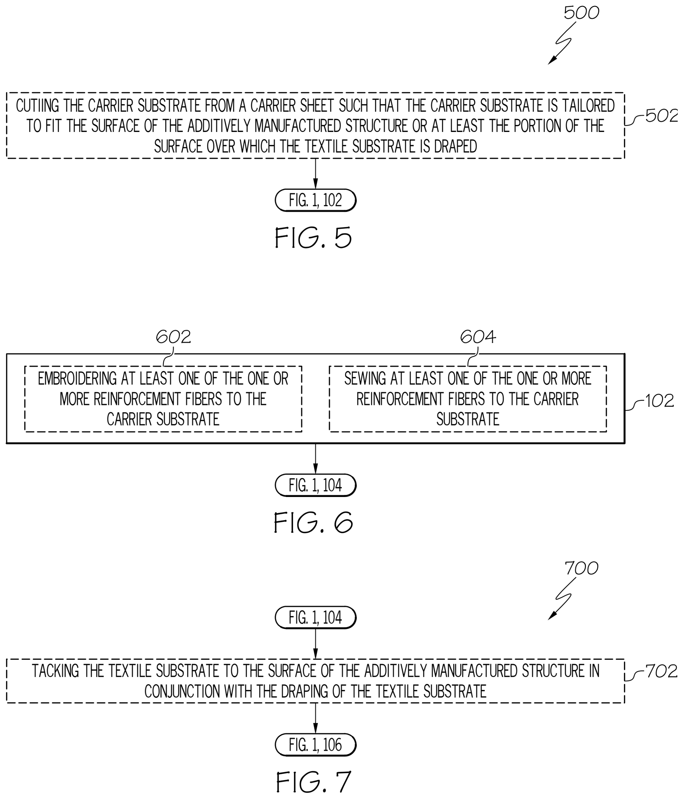

Referring generally to Figs. 1-11, 12A-C and 13, by way of examples, the present disclosure is directed to a method 100, 500, 700, 1000, 1100, 1300 for reinforcing an additively manufactured structure 200. Fig. 1 provides an example of the method 100 for reinforcing an additively manufactured structure 200. Fig. 2 provides an example of an additively manufactured structure 200. Fig. 3 provides an example of a textile substrate 300 and an example of a resin-based composite 308. Fig. 4 provides an example of a fiber-reinforced additively manufactured structure 400. Fig. 5, in combination with Fig. 1, provides an example of the method 500 for reinforcing an additively manufactured structure 200. Fig. 6 provides examples of the adding 102 of one or more reinforcement fibers 302 in the method 100 of Fig. 1.

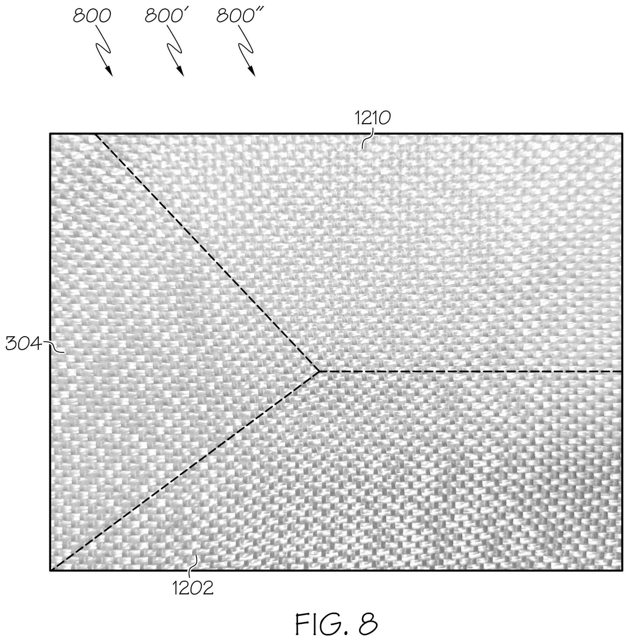

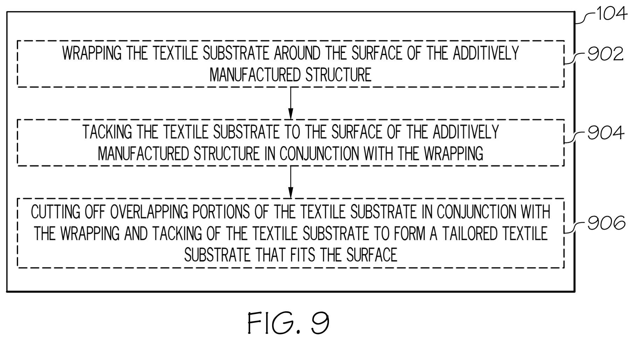

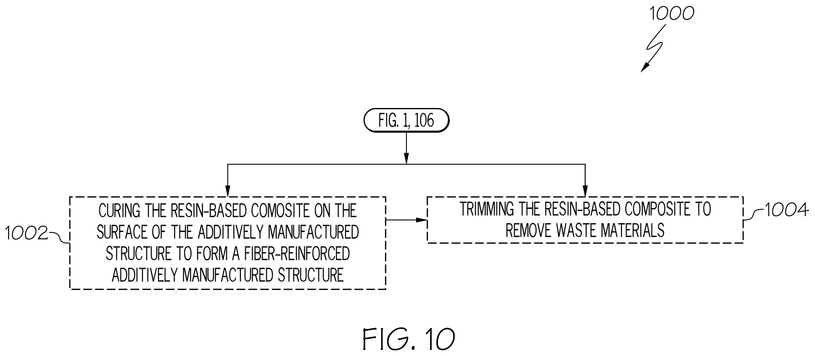

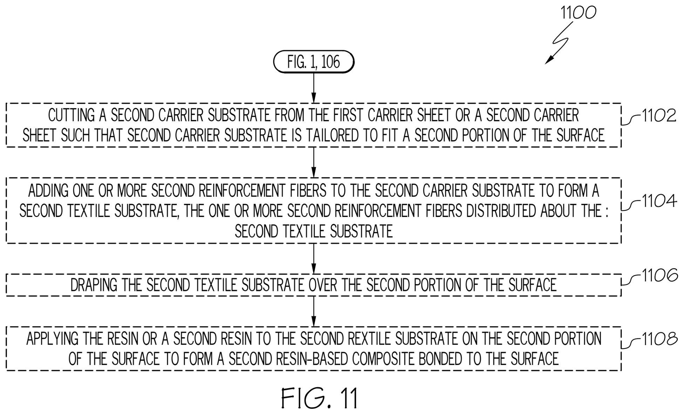

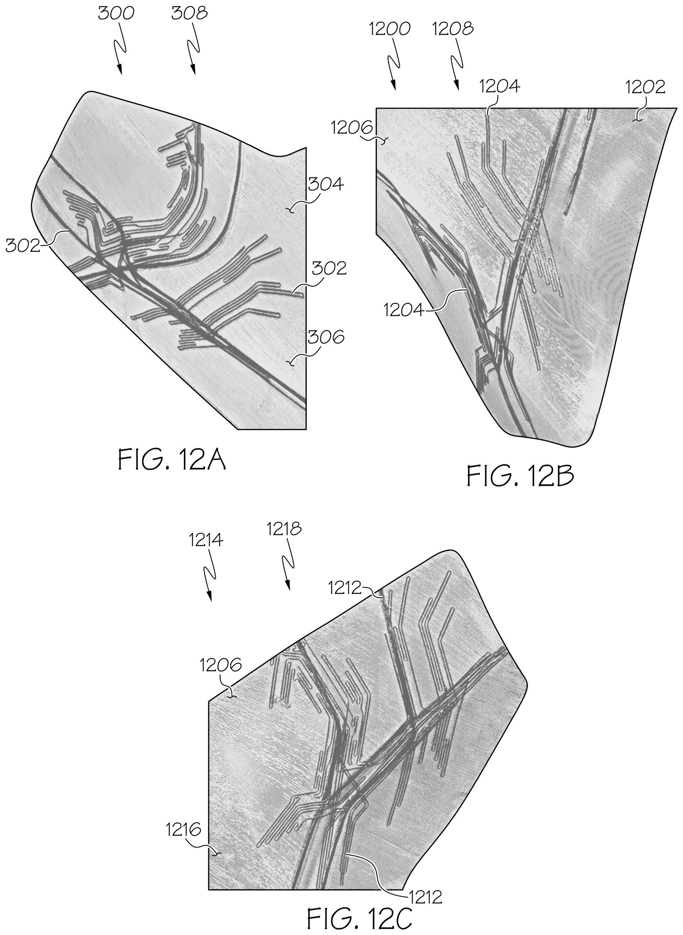

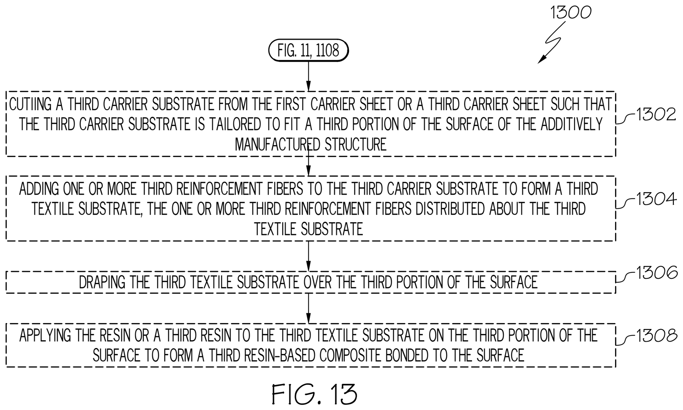

Fig. 7, in combination with Fig. 1, provides an example of the method 700 for reinforcing an additively manufactured structure 200. Fig. 8 provides an example of a carrier sheet 800 marked for cutting one or more carrier substrates 304, 1202, 1210. Fig. 9 provides an example of the draping 104 of a textile substrate in the method 100 of Fig. 1. Fig. 10, in combination with Fig. 1, provides an example of the method 1000 for reinforcing an additively manufactured structure 200. Fig. 11, in combination with Fig. 1, provides an example of the method 1100 for reinforcing an additively manufactured structure 200. Figs. 12A-C provides examples of first, second and third textile substrates 300, 1200, 1214 and examples of first, second and third resin-based composites 308, 1208, 1218. Fig. 13, in combination with Fig. 1, provides an example of the method 1300 for reinforcing an additively manufactured structure 200.

With reference again to Figs. 1-4, in one or more examples, a method 100 (see Fig. 1) for reinforcing an additively manufactured structure 200 includes adding 102 one or more reinforcement fibers 302 to a carrier substrate 304 to form a textile substrate 300. The one or more reinforcement fibers 302 distributed about the textile substrate 300. At 104, the textile substrate 300 is draped over at least a portion 202 of a surface 204 of the additively manufactured structure 200. At 106, a resin 306 is applied to the textile substrate 300 on the surface 204 of the additively manufactured structure 200 to form a resin-based composite 308 bonded to the surface 204.

In another example of the method 100, the applying 106 of the resin 306 to the textile substrate 300 on the surface 204 of the additively manufactured structure 200 forms a fiber-reinforced additively manufactured structure 400.

In yet another example of the method 100, the additively manufactured structure 200 includes a polymer material, a ceramic material, a metal material or any other suitable material in any suitable combination. In still another example of the method 100, the additively manufactured structure 200 was fabricated using a three-dimensional printer. In still yet another example of the method 100, the additively manufactured structure 200 was fabricated using fused deposition modelling.

In another example of the method 100, the one or more reinforcement fibers 302 include one or more non-conductive fibers, one or more glass fibers, one or more nylon fibers, one or more conductive fibers, one or more carbon fibers, one or more aramid fibers, one or more metal fibers, one or more copper fibers, one or more aluminum fibers or any other suitable type of reinforcement fibers in any suitable combination. In yet another example of the method 100, the one or more reinforcement fibers 302 are added to the carrier substrate 304 using tailored fiber placement.

In still another example of the method 100, the carrier substrate 304 includes a woven fabric ply, a plastic film substrate, a laminate film substrate, a woven film substrate, a woven mesh substrate, a mesh screen substrate or any other suitable substrate in any suitable combination. In a further example, the woven fabric ply includes natural reinforcement fibers, synthetic reinforcement fibers, glass reinforcement fibers, nylon reinforcement fibers, carbon reinforcement fibers, aramid reinforcement fibers or any other suitable reinforcement fibers in any suitable combination. In still yet another example of the method 100, the carrier substrate 304 is sized to cover at least the portion 202 of the surface 204 of the additively manufactured structure 200 over which the textile substrate 300 is draped. In another example of the method 100, the carrier substrate 304 is sized to cover the surface 204 of the additively manufactured structure 200.

With reference again to Figs. 1-3, 5, 6 and 8, in one or more examples, a method 500 (see Fig. 5) for reinforcing an additively manufactured structure 200 includes the method 100 of Fig. 1. The method 500 begins at 502 where the carrier substrate 304 is cut from a carrier sheet 800 such that the carrier substrate 304 is tailored to fit the surface 204 of the additively manufactured structure 200 or at least the portion 202 of the surface 204 over which the textile substrate 300 is draped. The method 500 continues from 502 to 102 of Fig. 1.

In another example of the method 100, the adding 102 of the one or more reinforcement fibers 302 includes embroidering 602 at least one of the one or more reinforcement fibers 302 to the carrier substrate 304.

In yet another example of the method 100, the adding 102 of the one or more reinforcement fibers 302 includes sewing 604 at least one of the one or more reinforcement fibers 302 to the carrier substrate 304.

With reference again to Figs. 1-3 and 7, in one or more examples, a method 700 (see Fig. 7) for reinforcing an additively manufactured structure 200 includes the method 100 of Fig. 1. The method 700 continues from 104 of Fig. 1 to 702 where the textile substrate 300 is tacked to the surface 204 of the additively manufactured structure 200 in conjunction with the draping 104 of the textile substrate 300. The method 700 continues from 702 to 106 of Fig. 1.

In another example of the method 100, the draping 104 of the textile substrate 300 includes wrapping 902 the textile substrate 300 around the surface 204 of the additively manufactured structure 200. At 904, the textile substrate 300 is tacked to the surface 204 of the additively manufactured structure 200 in conjunction with the wrapping 902. In a further example, at 906, overlapping portions of the textile substrate 300 are cut off in conjunction with the wrapping 902 and tacking 904 of the textile substrate 300 to form a tailored textile substrate 310 that fits the surface 204.

In yet another example of the method 100, the resin 306 includes a thermoset resin, a curing agent, a hardener, a catalyst, a polyester resin, a vinyl ester resin, an epoxy resin, an phenolic resin, a bismaleimide resin, a polyurethane resin, a thermoplastic resin, a polyamide resin, a polyvinyl alcohol resin, a polyethylene resin, a polytetrafluoroethylene resin, a polyvinyl chloride resin, a polypropylene resin, a polyether-ether ketone resin or any other suitable type of resin in any suitable combination.

In still another example of the method 100, the applying 106 of the resin 306 to the textile substrate 300 is performed using a resin infusion process, a vacuum bagging process, a hand laminating process, a brush-on laminating process, a roll-on laminating process or any other suitable resin applying process in any suitable combination.

With reference again to Figs. 1-4 and 10, in one or more examples, a method 1000 (see Fig. 10) for reinforcing an additively manufactured structure 200 includes the method 100 of Fig. 1. The method 1000 continues from 106 of Fig. 1 to 1002 where the resin-based composite 308 is cured on the surface 204 of the additively manufactured structure 200 to form a fiber-reinforced additively manufactured structure 400. In another example of the method 1000, the curing 1002 of the resin-based composite 308 is performed using a local ambient curing process, a local heating process, an oven curing process, an ultraviolet light curing process, a visible light curing process, a direct electric heating process, a microwave heating process, an induction heating process, a radio frequency heating process or any other suitable curing process in any suitable combination. The method 1000 also continues from 106 of Fig. 1 to 1004 where the resin-based composite 308 is trimmed to remove waste materials.

With reference again to Figs. 1-3, 8 11-13, in one or more examples, a method 1300 (see Fig. 13) for reinforcing an additively manufactured structure 200 includes the method 100 of Fig. 1 and the method 1100 of Fig. 11. The method 1300 continues from 11108 of Fig. 11 to 1302 where a third carrier substrate 1210 is cut from the first carrier sheet 800 or a third carrier sheet 800" such that the third carrier substrate 1210 is tailored to fit a third portion 208 of the surface 204 of the additively manufactured structure 200. At 1304, one or more third reinforcement fibers 1212 are added to the third carrier substrate 1210 to form a third textile substrate 1214. The one or more third reinforcement fibers 1212 distributed about the third textile substrate 1214. At 1306, the third textile substrate 1214 is draped over the third portion 208 of the surface 204. At 1308, the resin 306 or a third resin 1216 is applied to the third textile substrate 1214 on the third portion 208 of the surface 204 to form a third resin-based composite 1218 bonded to the surface 204.

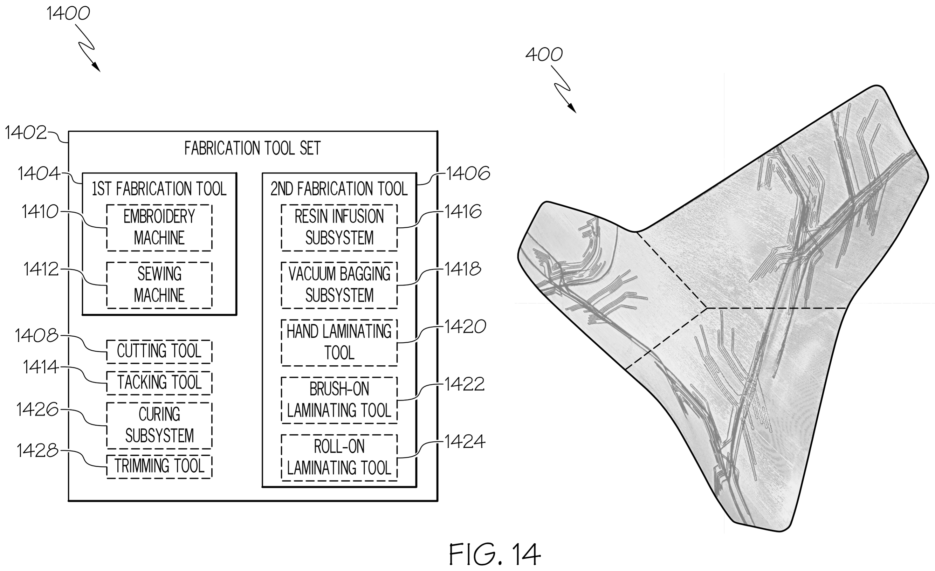

Referring generally to Figs. 2-4, 8, 12A-C and 14, by way of examples, the present disclosure is directed to a system 1400 for reinforcing an additively manufactured structure 200. Fig. 2 provides an example of an additively manufactured structure 200. Fig. 3 provides an example of a textile substrate 300 and an example of a resin-based composite 308. Fig. 4 provides an example of a fiber-reinforced additively manufactured structure 400. Fig. 8 provides an example of a carrier sheet 800 marked for cutting one or more carrier substrates 304, 1202, 1210. Figs. 12A-C provides examples of first, second and third textile substrates 300, 1200, 1214 and examples of first, second and third resin-based composites 308, 1208, 1218. Fig. 14 provides an example of the system 1400 for reinforcing an additively manufactured structure 200 and another example of the fiber-reinforced additively manufactured structure 400.

With reference again to Figs. 2-4, 8, 12A-C and 14, in one or more examples, a system 1400 (see Fig. 14) for reinforcing an additively manufactured structure 200 includes a fabrication tool set 1402 with a first fabrication tool 1404 and a second fabrication tool 1406. The first fabrication tool 1404 configured to add one or more reinforcement fibers 302 to a carrier substrate 304 to form a textile substrate 300. The one or more reinforcement fibers 302 distributed about the textile substrate 300. The textile substrate 300 is configured for draping over at least a portion 202 of a surface 204 of the additively manufactured structure 200. The second fabrication tool 1406 is configured to apply a resin 306 to the textile substrate 300 on the surface 204 of the additively manufactured structure 200 to form a resin-based composite 308 bonded to the surface 204.

In another example of the system 1400, the additively manufactured structure 200 was fabricated using a three-dimensional printer. In yet another example of the system 1400, the additively manufactured structure 200 was fabricated using fused deposition modelling. In still another example of the system 1400, the one or more reinforcement fibers 302 are added to the carrier substrate 304 using tailored fiber placement.

In still yet another example of the system 1400, the carrier substrate 304 is sized to cover at least the portion 202 of the surface 204 of the additively manufactured structure 200. In another example of the system 1400, the carrier substrate 304 is sized to cover the surface 204 of the additively manufactured structure 200.

In yet another example of the system 1400, the fabrication tool set 1402 also includes a cutting tool 1408 configured to cut the carrier substrate 304 from a carrier sheet 800 such that the carrier substrate 304 is tailored to fit the surface 204 of the additively manufactured structure 200 or at least the portion 202 of the surface 204 over which the textile substrate 300 is draped.

In still another example of the system 1400, the first fabrication tool 1404 includes an embroidery machine 1410 configured to embroider at least one of the one or more reinforcement fibers 302 to the carrier substrate 304. In still yet another example of the system 1400, the first fabrication tool 1404 includes a sewing machine 1412 configured to sew at least one of the one or more reinforcement fibers 302 to the carrier substrate 304.

In another example of the system 1400, the fabrication tool set 1402 also includes a tacking tool 1414 configured to tack the textile substrate 300 to the surface 204 of the additively manufactured structure 200 in conjunction with the draping 104 of the textile substrate 300.

In yet another example of the system 1400, the textile substrate 300 is configured for being wrapped around the surface 204 of the additively manufactured structure 200. In this example, the fabrication tool set 1402 also includes a tacking tool 1414 configured to tack the textile substrate 300 to the surface 204 in conjunction with the wrapping of the textile substrate 300. In a further example, the fabrication tool set 1402 also includes a cutting tool 1408 configured to cut off overlapping portions of the textile substrate 300 in conjunction with the wrapping and tacking of the textile substrate 300 to form a tailored textile substrate 310 that fits the surface 204.

In still another example of the system 1400, the second fabrication tool 1406 includes a resin infusion subsystem 1416, a vacuum bagging subsystem1418, a hand laminating tool 1420, a brush-on laminating tool 1422, a roll-on laminating tool 1424 or any other suitable resin applying subsystem or tool in any suitable combination.

In still yet another example of the system 1400, the fabrication tool set 1402 also includes a curing subsystem 1426 configured to cure the resin-based composite 308 on the surface 204 of the additively manufactured structure 200 to form a fiber-reinforced additively manufactured structure 400. In a further example, the curing subsystem 1426 includes a local heating device, an oven curing device, an ultraviolet light curing device, a visible light curing device, a direct electric heating device, a microwave heating device, an induction heating device, a radio frequency heating device or any other suitable curing subsystem in any suitable combination. In another example of the system 1400, the fabrication tool set 1402 also includes a trimming tool 1428 configured to trim the resin-based composite 308 to remove waste materials.

In yet another example of the system 1400, the fabrication tool set 1402 also includes a cutting tool 1408 configured to cut the carrier substrate 304 from a first carrier sheet 800 such that the carrier substrate 304 is tailored to fit a first portion 202 of the surface 204 of the additively manufactured structure 200. The cutting tool 1408 is configured to cut a second carrier substrate 1202 from the first carrier sheet 800 or a second carrier sheet 800' such that the second carrier substrate 1202 is tailored to fit a second portion 206 of the surface 204. The first fabrication tool 1404 is configured to add one or more second reinforcement fibers 1204 to the second carrier substrate 1202 to form a second textile substrate 1200. The one or more second reinforcement fibers 1204 distributed about the second textile substrate 1200. The second textile substrate 1200 is configured for draping over the second portion 206 of the surface 204. The second fabrication tool 1406 is configured to apply the resin 306 or a second resin 1206 to the second textile substrate 1200 on the second portion 206 of the surface 204 to form a second resin-based composite 1208 bonded to the surface 204.

In a further example of the system 1400, the cutting tool 1408 is configured to cut a third carrier substrate 1210 from the first carrier sheet 800 or a third carrier sheet 800" such that the third carrier substrate 1210 is tailored to fit a third portion 208 of the surface 204 of the additively manufactured structure 200. The first fabrication tool 1404 is configured to add one or more third reinforcement fibers 1212 to the third carrier substrate 1210 to form a third textile substrate 1214. The one or more third reinforcement fibers 1212 distributed about the third textile substrate 1214. The third textile substrate 1214 is configured for draping over the third portion 208 of the surface 204. The second fabrication tool 1406 is configured to apply the resin 306 or a third resin 1216 to the third textile substrate 1214 on the third portion 208 of the surface 204 to form a third resin-based composite 1218 bonded to the surface 204.

Referring generally to Figs. 2-4 and 12A-C, by way of examples, the present disclosure is directed to a fiber-reinforced additively manufactured structure 400. Fig. 2 provides an example of an additively manufactured structure 200. Fig. 3 provides an example of a textile substrate 300 and an example of a resin-based composite 308. Fig. 4 provides an example of the fiber-reinforced additively manufactured structure 400. Figs. 12A-C provides examples of first, second and third textile substrates 300, 1200, 1214 and examples of first, second and third resin-based composites 308, 1208, 1218.

With reference again to Figs. 1, 2A-B, 3, 4, 7, 9, 17, 18, 30 and 39, in one or more examples, a fiber-reinforced additively manufactured structure 400 (see Fig. 4) includes an additively manufactured structure 200 and at least one resin-based composite 308. The additively manufactured structure 200 including a surface 204. The at least one resin-based composite 308 bonded to at least a portion 202 of the surface 204. The at least one resin-based composite 308 including a textile substrate 300 and a resin 306. The textile substrate 300 including one or more reinforcement fibers 302 added to a carrier substrate 304. The resin 306 applied to the textile substrate 300 on the surface 204 of the additively manufactured structure 200 to form the at least one resin-based composite 308.

In another example of the fiber-reinforced additively manufactured structure 400, the additively manufactured structure 200 also includes a polymer material, a ceramic material, a metal material or any other suitable material in any suitable combination. In yet another example of the fiber-reinforced additively manufactured structure 400, the additively manufactured structure 200 was fabricated using a three-dimensional printer. In still another example of the fiber-reinforced additively manufactured structure 400, the additively manufactured structure 200 was fabricated using fused deposition modelling.

In still yet another example of the fiber-reinforced additively manufactured structure 400, the one or more reinforcement fibers 302 include one or more non-conductive fibers, one or more glass fibers, one or more nylon fibers, one or more conductive fibers, one or more carbon fibers, one or more aramid fibers, one or more metal fibers, one or more copper fibers, one or more aluminum fibers or any other suitable reinforcement fibers in any suitable combination. In another example of the fiber-reinforced additively manufactured structure 400, the one or more reinforcement fibers 302 are added to the carrier substrate 304 using tailored fiber placement.

In yet another example of the fiber-reinforced additively manufactured structure 400, the carrier substrate 304 includes a woven fabric ply, a plastic film substrate, a laminate film substrate, a woven film substrate, a woven mesh substrate, a mesh screen substrate or any other suitable substrate in any suitable combination. In a further example, the woven fabric ply includes natural reinforcement fibers, synthetic reinforcement fibers, glass reinforcement fibers, nylon reinforcement fibers, carbon reinforcement fibers, aramid reinforcement fibers or any other suitable reinforcement fibers in any suitable combination. In still another example of the fiber-reinforced additively manufactured structure 400, the carrier substrate 304 is sized to cover at least the portion 202 of the surface 204 of the additively manufactured structure 200. In still yet another example of the fiber-reinforced additively manufactured structure 400, the carrier substrate 304 is sized to cover the surface 204 of the additively manufactured structure 200.

In another example of the fiber-reinforced additively manufactured structure 400, the resin 306 includes a thermoset resin, a curing agent, a hardener, a catalyst, a polyester resin, a vinyl ester resin, an epoxy resin, an phenolic resin, a bismaleimide resin, a polyurethane resin, a thermoplastic resin, a polyamide resin, a polyvinyl alcohol resin, a polyethylene resin, a polytetrafluoroethylene resin, a polyvinyl chloride resin, a polypropylene resin, a polyether-ether ketone resin or any other suitable type of resin in any suitable combination.

In yet another example of the fiber-reinforced additively manufactured structure 400, the at least one resin-based composite 308 includes a first resin-based composite 308 bonded to a first portion 202 of the surface 204 of the additively manufactured structure 200. In this example, the fiber-reinforced additively manufactured structure 400 also includes a second resin-based composite 1208 bonded to a second portion 206 of the surface 204. The second resin-based composite 1208 includes a second textile substrate 1200 and the resin 306 or a second resin 1206. The second textile substrate 1200 includes one or more second reinforcement fibers 1204 added to a second carrier substrate 1202. The resin 306 or the second resin 1206 is applied to the second textile substrate 1200 on the surface 204 of the additively manufactured structure 200 to form the second resin-based composite 1208.

In a further example of the fiber-reinforced additively manufactured structure 400, the fiber-reinforced additively manufactured structure also includes a third resin-based composite 1218 bonded to a third portion 208 of the surface 204. In this example, the third resin-based composite 1218 includes a third textile substrate 1214 and the resin 306 or a third resin 1216. The third textile substrate 1214 includes one or more third reinforcement fibers 1212 added to a third carrier substrate 1210. The resin 306 or the third resin 1216 is applied to the third textile substrate 1214 on the surface 204 of the additively manufactured structure 200 to form the third resin-based composite 1218.

Examples of the methods 100, 500, 700, 1000, 1100, 1300 and systems 1400 for reinforcing additively manufactured structures 200 and the fiber-reinforced additively manufactured structures 400 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may be implemented to produce components and other equipment in various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element or component in the different drawings. Throughout the present disclosure, any one of a plurality of items may be referred to individually as the item and a plurality of items may be referred to collectively as the items and may be referred to with like reference numerals. Moreover, as used herein, a feature, element, component or step preceded with the word "a" or "an" should be understood as not excluding a plurality of features, elements, components or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component or hardware "configured to" perform a specified function is indeed capable of performing the specified function without any alteration, rather than merely having potential to perform the specified function after further modification. In other words, the system, apparatus, device, structure, article, element, component or hardware "configured to" perform a specified function is specifically selected, created, implemented, utilized, programmed and/or designed for the purpose of performing the specified function. As used herein, "configured to" denotes existing characteristics of a system, apparatus, structure, article, element, component or hardware that enable the system, apparatus, structure, article, element, component or hardware to perform the specified function without further modification. For purposes of this disclosure, a system, apparatus, device, structure, article, element, component or hardware described as being "configured to" perform a particular function may additionally or alternatively be described as being "adapted to" and/or as being "operative to" perform that function.

Unless otherwise indicated, the terms "first," "second," "third," etc. are used herein merely as labels and are not intended to impose ordinal, positional or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1, 4-7, 9-11 and 13, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 1, 4-7, 9-11 and 13 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

In Figs. 2, 3, 8, 12A-C and 14, referred to above, may represent functional elements, features or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 2, 3, 8, 12A-C and 14, referred to above, need be included in every example and not all elements, features and/or components described herein are necessarily depicted in each illustrative example. Accordingly, some of the elements, features and/or components described and illustrated in Figs. 2, 3, 8, 12A-C and 14 may be combined in various ways without the need to include other features described and illustrated in Figs. 2, 3, 8, 12A-C and 14, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 2, 3, 8, 12A-C and 14, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 2, 3, 8, 12A-C and 14 and such elements, features and/or components may not be discussed in detail herein with reference to each of Figs. 2, 3, 8, 12A-C and 14. Similarly, all elements, features and/or components may not be labeled in each of Figs. 2, 3, 8, 12A-C and 14, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage or characteristic described in connection with an example is included in at least one example. Thus, discussion of features, advantages and similar language used throughout the present disclosure may, but does not necessarily, refer to the same example.

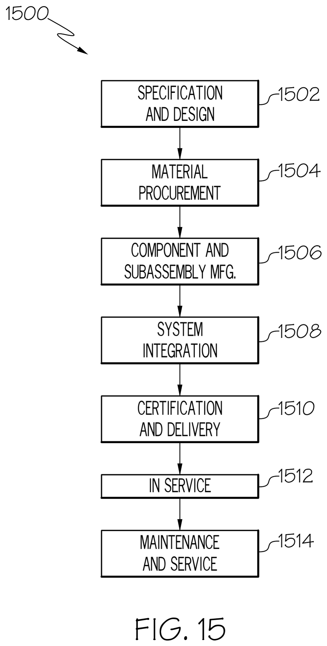

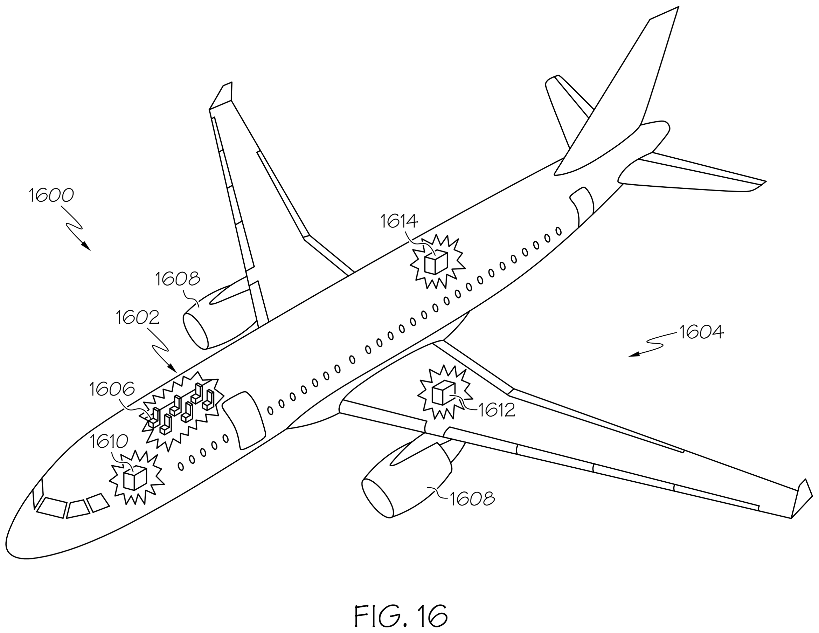

Examples of the subject matter disclosed herein may be described in the context of aircraft manufacturing and service method 1500 as shown in Fig. 15 and aircraft 1600 as shown in Fig. 16. In one or more examples, the disclosed methods and systems for associating test data for a part under test with an end item coordinate system may be used in aircraft manufacturing. During pre-production, the service method 1500 may include specification and design (block 1502) of aircraft 1600 and material procurement (block 1504). During production, component and subassembly manufacturing (block 1506) and system integration (block 1508) of aircraft 1600 may take place. Thereafter, aircraft 1600 may go through certification and delivery (block 1150) to be placed in service (block 1512). While in service, aircraft 1600 may be scheduled for routine maintenance and service (block 1514). Routine maintenance and service may include modification, reconfiguration, refurbishment, etc. of one or more systems of aircraft 1600.

Each of the processes of the service method 1500 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 16, aircraft 1600 produced by the service method 1500 may include airframe 1602 with a plurality of high-level systems 1604 and interior 1606. Examples of high-level systems 1604 include one or more of propulsion system 1608, electrical system 1610, hydraulic system 1612 and environmental system 1614. Any number of other systems may be included. Although an aerospace example is shown, the principles disclosed herein may be applied to other industries, such as the automotive industry. Accordingly, in addition to aircraft 1600, the principles disclosed herein may apply to other vehicles, e.g., land vehicles, marine vehicles, space vehicles, etc.

The disclosed methods 100, 500, 700, 1000, 1100, 1300 and systems 1400 for reinforcing additively manufactured structures 200 and the fiber-reinforced additively manufactured structures 400 may be employed during any one or more of the stages of the manufacturing and service method 1500. For example, components or subassemblies corresponding to component and subassembly manufacturing (block 1506) may be fabricated or manufactured in a manner similar to components or subassemblies produced while aircraft 1600 is in service (block 1512). Also, one or more examples of the system(s), method(s) or combination thereof may be utilized during production stages (block 1506 and block 1508), for example, by substantially expediting assembly of or reducing the cost of aircraft 1600. Similarly, one or more examples of the system or method realizations or a combination thereof, may be utilized, for example and without limitation, while aircraft 1600 is in service (block 1512) and/or during maintenance and service (block 1514).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 500, 700, 1000, 1100, 1300 and systems 1400 for reinforcing additively manufactured structures 200 and the fiber-reinforced additively manufactured structures 400 have been shown and described, modifications may occur to those skilled in the art upon reading the specification. The present application includes such modifications and is limited only by the scope of the claims.
The disclosure also include the following numbered clauses:
Clause 1. A method for reinforcing an additively manufactured structure, the method comprising:
   adding one or more reinforcement fibers to a carrier substrate to form a textile substrate, the one or more reinforcement fibers distributed about the textile substrate;
   draping the textile substrate over at least a portion of a surface of the additively manufactured structure; and
   applying a resin to the textile substrate on the surface of the additively manufactured structure to form a resin-based composite bonded to the surface.
Clause 2. The method of Clause 1 wherein the applying of the resin to the textile substrate on the surface of the additively manufactured structure forms a fiber-reinforced additively manufactured structure.
Clause 3. The method of Clause 1 or 2 wherein the additively manufactured structure comprises at least one of a polymer material, a ceramic material and a metal material.
Clause 4. The method of any preceding Clause wherein the additively manufactured structure was fabricated using a three-dimensional printer.
Clause 5. The method of any of Clauses 1 to 3 wherein the additively manufactured structure was fabricated using fused deposition modelling.
Clause 6. The method of any preceding Clause wherein the one or more reinforcement fibers comprise at least one of one or more non-conductive fibers, one or more glass fibers, one or more nylon fibers, one or more conductive fibers, one or more carbon fibers, one or more aramid fibers, one or more metal fibers, one or more copper fibers and one or more aluminum fibers.
Clause 7. The method of any preceding Clause wherein the one or more reinforcement fibers are added to the carrier substrate using tailored fiber placement.
Clause 8. The method of any preceding Clause wherein the carrier substrate comprises at least one of a woven fabric ply, a plastic film substrate, a laminate film substrate, a woven film substrate, a woven mesh substrate and a mesh screen substrate.
Clause 9. The method of Clause 8 wherein the woven fabric ply comprises at least one of natural reinforcement fibers, synthetic reinforcement fibers, glass reinforcement fibers, nylon reinforcement fibers, carbon reinforcement fibers and aramid reinforcement fibers.
Clause 10. The method of any preceding Clause wherein the carrier substrate is sized to cover at least the portion of the surface of the additively manufactured structure over which the textile substrate is draped.
Clause 11. The method of Clauses 1 to 9 wherein the carrier substrate is sized to cover the surface of the additively manufactured structure.
Clause 12. The method of any preceding Clause , further comprising:
   cutting the carrier substrate from a carrier sheet such that the carrier substrate is tailored to fit the surface of the additively manufactured structure or at least the portion of the surface over which the textile substrate is draped.
Clause 13. The method of any preceding Clause, the adding of the one or more reinforcement fibers comprising:
   embroidering at least one of the one or more reinforcement fibers to the carrier substrate.
Clause 14. The method of any of Clauses 1 to 12, the adding of the one or more reinforcement fibers comprising:
   sewing at least one of the one or more reinforcement fibers to the carrier substrate.
Clause 15. The method of any preceding Clause, further comprising:
   tacking the textile substrate to the surface of the additively manufactured structure in conjunction with the draping of the textile substrate.
Clause 16. The method of any preceding Clause, the draping of the textile substrate comprising:
   wrapping the textile substrate around the surface of the additively manufactured structure; and
   tacking the textile substrate to the surface of the additively manufactured structure in conjunction with the wrapping.
Clause 17. The method of Clause 16, further comprising:
   cutting off overlapping portions of the textile substrate in conjunction with the wrapping and tacking of the textile substrate to form a tailored textile substrate that fits the surface.
Clause 18. The method of any preceding Clause wherein the resin comprises at least one of a thermoset resin, a curing agent, a hardener, a catalyst, a polyester resin, a vinyl ester resin, an epoxy resin, an phenolic resin, a bismaleimide resin, a polyurethane resin, a thermoplastic resin, a polyamide resin, a polyvinyl alcohol resin, a polyethylene resin, a polytetrafluoroethylene resin, a polyvinyl chloride resin, a polypropylene resin and a polyether-ether ketone resin.
Clause 19. The method of any preceding Clause wherein the applying of the resin to the textile substrate is performed using at least one of a resin infusion process, a vacuum bagging process, a hand laminating process, a brush-on laminating process and a roll-on laminating process.
Clause 20. The method of any preceding Clause, further comprising:
   curing the resin-based composite on the surface of the additively manufactured structure to form a fiber-reinforced additively manufactured structure.
Clause 21. The method of Clause 20 wherein the curing of the resin-based composite is performed using at least one of a local ambient curing process, a local heating process, an oven curing process, an ultraviolet light curing process, a visible light curing process, a direct electric heating process, a microwave heating process, an induction heating process and a radio frequency heating process.
Clause 22. The method of any preceding Clause , further comprising:
   trimming the resin-based composite to remove waste materials.
Clause 23. The method of any preceding Clause wherein the carrier substrate is cut from a first carrier sheet and tailored to fit a first portion of the surface of the additively manufactured structure, the method further comprising:
   cutting a second carrier substrate from the first carrier sheet or a second carrier sheet such that the second carrier substrate is tailored to fit a second portion of the surface;
   adding one or more second reinforcement fibers to the second carrier substrate to form a second textile substrate, the one or more second reinforcement fibers distributed about the second textile substrate;
   draping the second textile substrate over the second portion of the surface; and
   applying the resin or a second resin to the second textile substrate on the second portion of the surface to form a second resin-based composite bonded to the surface.
Clause 24. The method of Clause 23 the method further comprising:
   cutting a third carrier substrate from the first carrier sheet or a third carrier sheet such that the third carrier substrate is tailored to fit a third portion of the surface of the additively manufactured structure;
   adding one or more third reinforcement fibers to the third carrier substrate (1210) to form a third textile substrate, the one or more third reinforcement fibers distributed about the third textile substrate;
   draping the third textile substrate over the third portion of the surface; and
   applying the resin or a third resin to the third textile substrate on the third portion of the surface to form a third resin-based composite bonded to the surface.
Clause 25. A system for reinforcing an additively manufactured structure, the system comprising:
   a fabrication tool set comprising:
      a first fabrication tool configured to add one or more reinforcement fibers to a carrier substrate to form a textile substrate, the one or more reinforcement fibers distributed about the textile substrate; and
      a second fabrication tool, and
   wherein the textile substrate is configured for draping over at least a portion of a surface of the additively manufactured structure, and
   wherein the second fabrication tool is configured to apply a resin to the textile substrate on the surface of the additively manufactured structure to form a resin-based composite bonded to the surface.
Clause 26. The system of Clause 25 wherein the additively manufactured structure was fabricated using a three-dimensional printer.
Clause 27. The system of Clause 25 wherein the additively manufactured structure was fabricated using fused deposition modelling.
Clause 28. The system of any of Clauses 25 to 27wherein the one or more reinforcement fibers are added to the carrier substrate using tailored fiber placement.
Clause 29. The system of any of Clauses 25 to 28wherein the carrier substrate is sized to cover at least the portion of the surface of the additively manufactured structure over which the textile substrate is draped.
Clause 30. The system of any of Clauses 25 to 28wherein the carrier substrate is sized to cover the surface of the additively manufactured structure.
Clause 31. The system of any of Clauses 25 to 30, the fabrication tool set further comprising:
   a cutting tool configured to cut the carrier substrate from a carrier sheet such that the carrier substrate is tailored to fit the surface of the additively manufactured structure or at least the portion of the surface over which the textile substrate is draped.
Clause 32. The system of any of Clauses 25 to 31, the first fabrication tool comprising:
   an embroidery machine configured to embroider at least one of the one or more reinforcement fibers to the carrier substrate.
Clause 33. The system of any of Clauses 25 to 31, the first fabrication tool comprising:
   a sewing machine configured to sew at least one of the one or more reinforcement fibers to the carrier substrate.
Clause 34. The system of any of Clauses 25 to 33, the fabrication tool set further comprising:
   a tacking tool configured to tack the textile substrate to the surface of the additively manufactured structure in conjunction with the draping of the textile substrate.
Clause 35. The system of any of Clauses 25 to 34wherein the textile substrate is configured for being wrapped around the surface of the additively manufactured structure, the fabrication tool set further comprising:
   a tacking tool configured to tack the textile substrate to the surface in conjunction with the wrapping of the textile substrate.
Clause 36. The system of any of Clauses 25 to 35, the fabrication tool set further comprising:
   a cutting tool configured to cut off overlapping portions of the textile substrate in conjunction with the wrapping and tacking of the textile substrate to form a tailored textile substrate that fits the surface.
Clause 37. The system of any of Clauses 25 to 36 wherein the second fabrication tool comprises at least one of a resin infusion subsystem, a vacuum bagging subsystem, a hand laminating tool, a brush-on laminating tool and a roll-on laminating tool.
Clause 38. The system of any of Clauses 25 to 37, the fabrication tool set further comprising:
   a curing subsystem configured to cure the resin-based composite on the surface of the additively manufactured structure to form a fiber-reinforced additively manufactured structure.
Clause 39. The system of Clause 38 wherein the curing subsystem comprises at least one of a local heating device, an oven curing device, an ultraviolet light curing device, a visible light curing device, a direct electric heating device, a microwave heating device, an induction heating device and a radio frequency heating device.
Clause 40. The system of any of Clauses 25 to 39, the fabrication tool set further comprising:
   a trimming tool configured to trim the resin-based composite to remove waste materials.
Clause 41. The system of any of Clauses 25 to 40, the fabrication tool set further comprising:
   a cutting tool configured to cut the carrier substrate from a first carrier sheet such that the carrier substrate is tailored to fit a first portion of the surface of the additively manufactured structure, and
   wherein the cutting tool is configured to cut a second carrier substrate from the first carrier sheet or a second carrier sheet such that the second carrier substrate is tailored to fit a second portion of the surface, and
   wherein the first fabrication tool is configured to add one or more second reinforcement fibers to the second carrier substrate to form a second textile substrate, the one or more second reinforcement fibers distributed about the second textile substrate, and
   wherein the second textile substrate is configured for draping over the second portion of the surface, and
   wherein the second fabrication tool is configured to apply the resin or a second resin to the second textile substrate on the second portion of the surface to form a second resin-based composite bonded to the surface.
Clause 42. The system of Clause 41 wherein the cutting tool is configured to cut a third carrier substrate from the first carrier sheet or a third carrier sheet such that the third carrier substrate is tailored to fit a third portion of the surface of the additively manufactured structure, and
   wherein the first fabrication tool is configured to add one or more third reinforcement fibers to the third carrier substrate to form a third textile substrate, the one or more third reinforcement fibers distributed about the third textile substrate, and
   wherein the third textile substrate is configured for draping over the third portion of the surface, and
   wherein the second fabrication tool is configured to apply the resin or a third resin to the third textile substrate on the third portion of the surface to form a third resin-based composite bonded to the surface.
Clause 43. A fiber-reinforced additively manufactured structure, comprising:
   an additively manufactured structure comprising a surface; and
   at least one resin-based composite bonded to at least a portion of the surface, the at least one resin-based composite comprising;
      a textile substrate comprising one or more reinforcement fibers added to a carrier substrate; and
      a resin applied to the textile substrate on the surface of the additively manufactured structure to form the at least one resin-based composite.
Clause 44. The fiber-reinforced additively manufactured structure of Clause 43 wherein the additively manufactured structure further comprises at least one of a polymer material, a ceramic material and a metal material.
Clause 45. The fiber-reinforced additively manufactured structure of Clause 43 or 44wherein the additively manufactured structure was fabricated using a three-dimensional printer.
Clause 46. The fiber-reinforced additively manufactured structure of Clause 43 or 44 wherein the additively manufactured structure was fabricated using fused deposition modelling.
Clause 47. The fiber-reinforced additively manufactured structure of any of Clauses 43 to 46wherein the one or more reinforcement fibers comprise at least one of one or more non-conductive fibers, one or more glass fibers, one or more nylon fibers, one or more conductive fibers, one or more carbon fibers, one or more aramid fibers, one or more metal fibers, one or more copper fibers and one or more aluminum fibers.
Clause 48. The fiber-reinforced additively manufactured structure of any of Clauses 43 to 47wherein the one or more reinforcement fibers are added to the carrier substrate using tailored fiber placement.
Clause 49. The fiber-reinforced additively manufactured structure of any of Clauses 43 to 48 wherein the carrier substrate comprises at least one of a woven fabric ply, a plastic film substrate, a laminate film substrate, a woven film substrate, a woven mesh substrate and a mesh screen substrate.
Clause 50. The fiber-reinforced additively manufactured structure of Clause 49 wherein the woven fabric ply comprises at least one of natural reinforcement fibers, synthetic reinforcement fibers, glass reinforcement fibers, nylon reinforcement fibers, carbon reinforcement fibers and aramid reinforcement fibers.
Clause 51. The fiber-reinforced additively manufactured structure of any of Clauses 43 to 50 wherein the carrier substrate is sized to cover at least the portion of the surface of the additively manufactured structure over which the textile substrate is draped.
Clause 52. The fiber-reinforced additively manufactured structure of any of Clauses 43 to 50 wherein the carrier substrate is sized to cover the surface of the additively manufactured structure.
Clause 53. The fiber-reinforced additively manufactured structure of any of Clauses 43 to 52 wherein the resin comprises at least one of a thermoset resin, a curing agent, a hardener, a catalyst, a polyester resin, a vinyl ester resin, an epoxy resin, an phenolic resin, a bismaleimide resin, a polyurethane resin, a thermoplastic resin, a polyamide resin, a polyvinyl alcohol resin, a polyethylene resin, a polytetrafluoroethylene resin, a polyvinyl chloride resin, a polypropylene resin and a polyether-ether ketone resin.
Clause 54. The fiber-reinforced additively manufactured structure of any of Clauses 43 to 53wherein the at least one resin-based composite comprises a first resin-based composite bonded to a first portion of the surface of the additively manufactured structure, the fiber-reinforced additively manufactured structure further comprising:
   a second resin-based composite bonded to a second portion of the surface, the second resin-based composite comprising;
   a second textile substrate comprising one or more second reinforcement fibers added to a second carrier substrate; and
   the resin or a second resin applied to the second textile substrate on the surface of the additively manufactured structure to form the second resin-based composite.
Clause 55. The fiber-reinforced additively manufactured structure of Clause 54, the fiber-reinforced additively manufactured structure further comprising:
   a third resin-based composite bonded to a third portion of the surface, the third resin-based composite comprising;
   a third textile substrate comprising one or more third reinforcement fibers added to a third carrier substrate; and
   the resin or a third resin applied to the third textile substrate on the surface of the additively manufactured structure to form the third resin-based composite.
Clause 56. An additively manufactured structure which has been reinforced using the method of any of clauses 1 to 24.
Clause 57. A system for reinforcing an additively manufactured structure, the system configured to perform the method of any of clauses 1 to 24.
Clause 58. The system of any of clauses 25 to 42, wherein the system is configured to perform the method of any of clauses 1 to 24.
Clause 59. The fiber-reinforced additively manufactured structure of any of clauses 43 to 55, manufactured using the method of any of clauses 1 to 24.
Clause 60. The fiber-reinforced additively manufactured structure of any of clauses 43 to 55, manufactured using the system of any of clauses 25 to 42.

## Claims

1. A method (100) for reinforcing an additively manufactured structure (200), the method comprising:
adding (102) one or more reinforcement fibers (302) to a carrier substrate (304) to form a textile substrate (300), the one or more reinforcement fibers (302) distributed about the textile substrate (300);
draping (104) the textile substrate (300) over at least a portion (202) of a surface (204) of the additively manufactured structure (200); and
applying (106) a resin (306) to the textile substrate (300) on the surface (204) of the additively manufactured structure (200) to form a resin-based composite (308) bonded to the surface (204).

2. The method of Claim 1 wherein the applying (106) of the resin (306) to the textile substrate (300) on the surface (204) of the additively manufactured structure (200) forms a fiber-reinforced additively manufactured structure (400).

3. The method of Claims 1 or 2 wherein the additively manufactured structure (200) comprises at least one of a polymer material, a ceramic material and a metal material.

4. The method of any preceding Claim wherein the one or more reinforcement fibers (302) comprise at least one of one or more non-conductive fibers, one or more glass fibers, one or more nylon fibers, one or more conductive fibers, one or more carbon fibers, one or more aramid fibers, one or more metal fibers, one or more copper fibers and one or more aluminum fibers.

5. The method of any preceding Claim wherein the one or more reinforcement fibers (302) are added to the carrier substrate (304) using tailored fiber placement.

6. The method of any preceding Claim wherein the carrier substrate (304) comprises at least one of a woven fabric ply, a plastic film substrate, a laminate film substrate, a woven film substrate, a woven mesh substrate and a mesh screen substrate.

7. The method of any preceding Claim wherein the carrier substrate (304) is sized to cover at least the portion (202) of the surface (204) of the additively manufactured structure (200) over which the textile substrate (300) is draped, or wherein the carrier substrate (304) is sized to cover the surface (204) of the additively manufactured structure (200).

8. The method (500) of any preceding Claim, further comprising at least one of:
cutting (502) the carrier substrate (304) from a carrier sheet (800) such that the carrier substrate (304) is tailored to fit the surface (204) of the additively manufactured structure (200) or at least the portion (202) of the surface (204) over which the textile substrate (300) is draped;
tacking (702) the textile substrate (300) to the surface (204) of the additively manufactured structure (200) in conjunction with the draping (104) of the textile substrate (300);
curing (1002) the resin-based composite (308) on the surface (204) of the additively manufactured structure (200) to form a fiber-reinforced additively manufactured structure (400);and trimming (1004) the resin-based composite (308) to remove waste materials.

9. The method of any preceding Claim, the adding (102) of the one or more reinforcement fibers (302) comprising one of:
embroidering (602) at least one of the one or more reinforcement fibers (302) to the carrier substrate (304) or
sewing (604) at least one of the one or more reinforcement fibers (302) to the carrier substrate (304).

10. The method of any preceding Claim, the draping (104) of the textile substrate (300) comprising:
wrapping (902) the textile substrate (300) around the surface (204) of the additively manufactured structure (200); and
tacking (904) the textile substrate (300) to the surface (204) of the additively manufactured structure (200) in conjunction with the wrapping (902).

11. The method of any preceding Claim wherein the resin (306) comprises at least one of a thermoset resin, a curing agent, a hardener, a catalyst, a polyester resin, a vinyl ester resin, an epoxy resin, an phenolic resin, a bismaleimide resin, a polyurethane resin, a thermoplastic resin, a polyamide resin, a polyvinyl alcohol resin, a polyethylene resin, a polytetrafluoroethylene resin, a polyvinyl chloride resin, a polypropylene resin and a polyether-ether ketone resin.

12. The method of any preceding Claim wherein the applying (106) of the resin (306) to the textile substrate (300) is performed using at least one of a resin infusion process, a vacuum bagging process, a hand laminating process, a brush-on laminating process and a roll-on laminating process.

13. The method (1100) of any preceding Claim wherein the carrier substrate (304) is cut from a first carrier sheet (800) and tailored to fit a first portion (202) of the surface (204) of the additively manufactured structure (200), the method further comprising:
cutting (1102) a second carrier substrate (1202) from the first carrier sheet (800) or a second carrier sheet (800') such that the second carrier substrate (1202) is tailored to fit a second portion (206) of the surface (204);
adding (1104) one or more second reinforcement fibers (1204) to the second carrier substrate (1202) to form a second textile substrate (1200), the one or more second reinforcement fibers (1204) distributed about the second textile substrate (1200);
draping (1106) the second textile substrate (1200) over the second portion (206) of the surface (204); and
applying (1108) the resin (306) or a second resin (1206) to the second textile substrate (1200) on the second portion (206) of the surface (204) to form a second resin-based composite (1208) bonded to the surface (204).

14. A system (1400) for reinforcing an additively manufactured structure (200), the system comprising:
a fabrication tool set (1402) comprising:
a first fabrication tool (1404) configured to add one or more reinforcement fibers (302) to a carrier substrate (304) to form a textile substrate (300), the one or more reinforcement fibers (302) distributed about the textile substrate (300); and
a second fabrication tool (1406), and
wherein the textile substrate (300) is configured for draping over at least a portion (202) of a surface (204) of the additively manufactured structure (200), and
wherein the second fabrication tool (1406) is configured to apply a resin (306) to the textile substrate (300) on the surface (204) of the additively manufactured structure (200) to form a resin-based composite (308) bonded to the surface (204).

15. A fiber-reinforced additively manufactured structure (400), comprising:
an additively manufactured structure (200) comprising a surface (204); and
at least one resin-based composite (308) bonded to at least a portion (202) of the surface (204), the at least one resin-based composite (308) comprising;
a textile substrate (300) comprising one or more reinforcement fibers (302) added to a carrier substrate (304); and
a resin (306) applied to the textile substrate (300) on the surface (204) of the additively manufactured structure (200) to form the at least one resin-based composite (308).
